# EUROPÄISCHE PATENTANMELDUNG

(11) **EP 0 565 513 A1**
(43) Veröffentlichungstag der Anmeldung: **13.10.1993**
(21) Anmeldenummer: 93890057.8
(22) Anmeldetag: 26.03.1993
(51) Int. Cl.: G01L 5/24

(54) **Kraftmessgerät**

(30) Priorität: 07.04.1992 AT 722/92
(71) Anmelder: Behensky, Erdhart,Dipl.Ing., A-5023 Salzburg (AT)
(72) Erfinder: Behensky, Erdhart,Dipl.Ing., A-5023 Salzburg (AT)
(74) Vertreter: Hübscher, Gerhard, Dipl.-Ing.

(57) **Zusammenfassung**

Ein Kraftmeßgerät weist einen zwischen zwei umfangseitig miteinander verbundenen Deckplatten eine meßflüssigkeitsgefüllte Druckkammer (8) bildenden und sich auf einem Auflager (13) abstützenden Meßwertgeber (1) auf.

Um einen einwandfrei abstützbaren, exakte Werte liefernden Meßwertgeber zu erreichen, ist der Meßwertgeber (1) über eine kugelige Abstützfläche (17) an einer entsprechend kugeligen Lagerfläche (18) des Auflagers (13) abgestützt.

## Beschreibung

Die Erfindung bezieht sich auf ein Kraftmeßgerät, insbesondere zur Bestimmung von Ankerkräften im Bauwesen, mit einem vorzugsweise ringscheibenförmigen, zwischen zwei umfangseitig miteinander verbundenen Deckplatten eine meßflüssigkeitsgefüllte Druckkammer aufweisenden, auf einem Auflager abstützbaren Meßwertgeber.

Die Meßwertgeber der bekannten Meßwertgeräte werden mittels einer ebenen Unterlagsplatte auf einem Auflager aufgesetzt und über einen Anker od. dgl. unter Zwischenlage einer auf die obere Deckplatte einwirkenden Lastverteilerplatte belastet. Da aber die Meßgenauigkeit außer vom Meßwertgeber selbst auch von der Richtung der Krafteinleitung in den Meßwertgeber abhängt und eine von der Senkrechten zur Auflageebene abweichende Kraftrichtung bzw. Ankerachse Meßungenauigkeiten hervorrufen, ist bisher praktisch immer mit Meßfehlern zu rechnen, die sich aus einer mangelhaften Krafteinleitung bei der Kraftmessung ergeben.

Der Erfindung liegt daher die Aufgabe zugrunde, diesen Nachteil zu beseitigen und ein Kraftmeßgerät der eingangs geschilderten Art zu schaffen, das sich durch seinen verhältnismäßig einfach abstütztbaren rationell herstellbaren und überraschend exakte Meßwerte liefernden Meßwertgeber auszeichnet.

Die Erfindung löst diese Aufgabe dadurch, daß der Meßwertgeber über eine kugelige Abstützfläche an einer entsprechenden kugeligen Lagerfläche des Auflagers abgestützt ist. Dadurch kann der Meßwertgeber genau auf die Ankerachse ausgerichtet werden und es ist stets für eine einwandfreie Krafteinleitung bei der Messung gesorgt. Ein einfaches Relativverschieben des Meßwertgebers bzw. der Abstützfläche gegenüber der Lagerfläche des Auflagers führt weitgehend unabhängig von der gegenseitigen Ausgangslage zur gewünschten Koaxialität von Meßwertgeber und Anker.

Ist die die eine Deckplatte bildende Blechplatte auf einer die andere Deckplatte bildenden biegesteifen Unterlagsplatte aufgeschweißt, die eine mit der inneren Druckkammer leitungsverbundene Anschlußbohrung zum Anschluß einer Meßleitung oder zur Aufnahme einer Meßeinrichtung aufweist, entsteht eine besonders zweckmäßige Konstruktion, da eine zusätzliche Unterlagsplatte unnötig wird und die Meßeinrichtung zur Kraft- oder Druckbestimmung sogar in der Unterlagsplatte integriert sein kann und die Abstützung nicht behindert.

Selbstverständlich kann die Unterlagsplatte des Meßwertgebers selbst mit der kugeligen Abstützfläche versehen sein, doch günstiger ist es, wenn der Unterlagsplatte eine die Abstützfläche bildende kalottenringförmige Zwischenplatte zugeordnet ist, da so jeder Meßwertgeber bedarfsweise mit der Zwischenplatte ergänzt werden kann, andernfalls aber mit einer ebenen Unterlagsplatte in üblicher Weise einsetzbar bleibt.

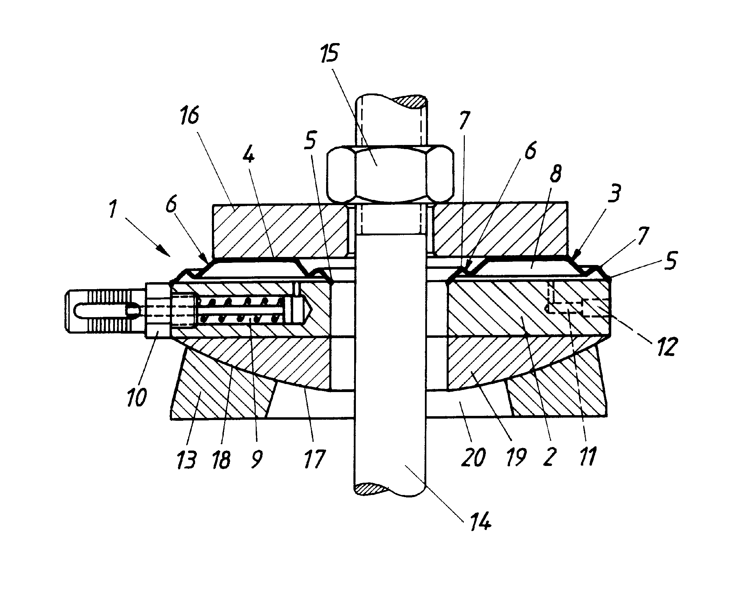

In der Zeichnung ist ein erfindungsgemäßer Meßwertgeber beispielsweise an Hand eines Querschnittes veranschaulicht.

Ein Meßwertgeber 1 besteht aus einer biegesteifen Unterlagsplatte 2, auf die eine gepreßte Blechplatte 3 aufgeschweißt ist. Diese Blechplatte 3 weist gegenüber einem ebenen Mittenbereich 4 im wesentlichen konisch geneigt zu den Verbindungsnähten 5 hin führenden Randbereiche 6 auf, die jeweils eine wellenförmige Profilierung 7 besitzen. Dadurch ergibt sich eine biegeelastische Anlenkzone und die Blechplatte 3 wirkt als Membran großer Beweglichkeit. Zwischen der Unterlagsplatte 2 und der Blechplatte 3 entsteht eine Druckkammer 8, die mit Meßflüssigkeit gefüllt ist, so daß der Meßflüssigkeitsdruck als Meßwert für die Bestimmung der auf die Blechplatte übertragenen Belastungen genutzt werden kann. Da aufgrund der Preßform der Blechplatte 3 der Mittenbereich 4 eine genau definierte Auflagefläche für die Last ergibt, kann nun aus den druckabhängigen Meßwerten die Last bestimmt werden. Ist in der Unterlagsplatte 2 eine mit der Druckkammer 8 leitungsverbundene Anschlußbohrung 9 vorgesehen, kann in diese eine Meßeinrichtung 10 zur direkten Kraft- bzw. Druckmessung eingesetzt werden. Dient, wie strichliert angedeutet, die Anschlußbohrung 11 zum Anschluß einer Meßleitung 12, ist die Druck- bzw. Kraftmessung auch mit beliebigem Abstand vom Einsatzort des Meßwertgebers 1 möglich.

Der Meßwertgeber 1 ist auf einem Auflager 13 abgestützt und wird über einen Anker 14, der mittels eines Ankerkopfes 15 und einer Lastverteilerplatte 16 an der Blechplatte 3 angreift, belastet. Um nun den Meßwertgeber 1 mit seiner Achse exakt auf die Ankerachse einstellen zu können, wirken Meßwertgeber 1 und Auflager 13 mit kugeligen Abstütz- und Lagerflächen 17, 18 zusammen, wobei der Unterlagsplatte 2 des Meßwertgebers eine die kugelige Abstützfläche 17 bildende kalottenringförmige Zwischenplatte 19 zugeordnet ist und das mit einer entsprechend großen Mittelbohrung 20 ausgeführte Auflager 13 selbst die korrespondierende Lagerfläche 18 bildet. Durch eine Relativverschiebung von Meßwertgeber 1 und Zwischenplatte 19 gegenüber dem Auflager 13 kann so eine exakte Koaxialität zwischen Anker 14 und Meßwertgeber 12 erreicht werden, was Voraussetzung für eine exakte Kraftmessung ist.

## Patentansprüche

1. Kraftmeßgerät, insbesondere zur Bestimmung von Ankerkräften im Bauwesen, mit einem vorzugsweise ringscheibenförmigen, zwischen zwei umfangseitig miteinander verbundenen Deckplatten eine meßflüssigkeitsgefüllte Druckkammer (8) aufweisenden, auf einem Auflager (13) abstützbaren Meßwertgeber (1), dadurch gekennzeichnet, daß der Meßwertgeber (1) über eine kugelige Abstützfläche (17) an einer entsprechend kugeligen Lagerfläche (18) des Auflagers (13) abgestützt ist.

2. Kraftmeßgerät nach Anspruch 1, dadurch gekennzeichnet, daß die die eine Deckplatte bildende Blechplatte (3) auf einer die andere Deckplatte bildenden biegesteifen Unterlagsplatte (2) aufgeschweißt ist, die eine mit der inneren Druckkammer(8) leitungsverbundeneAnschlußbohrung (9, 11) zum Anschluß einer Meßleitung (12) oder zur Aufnahme einer Meßeinrichtung (10) aufweist.

3. Kraftmeßgerät nach Anspruch 1 oder 2, dadurch gekennzeichnet, daß der Unterlagsplatte (2) des Meßwertgebers (1) eine die Abstützfläche (17) bildende kalottenringförmige Zwischenplatte (19) zugeordnet ist.
